(19) Europäisches Patentamt
European Patent Office
Office européen des brevets

(11)  **EP 2 040 398 B1**

(12)  **EUROPEAN PATENT SPECIFICATION**

(45) Date of publication and mention
of the grant of the patent:
**31.07.2013  Bulletin 2013/31**

(51) Int Cl.:
***H04B 10/63*** (2013.01)

(21) Application number: **07291122.5**

(22) Date of filing: **21.09.2007**

(54) **Method and apparatus for coherent detection of optical signals**

Verfahren und Vorrichtung für die kohärente Erfassung optischer Signale

Procédé et appareil de détection cohérente de signaux optiques

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**25.03.2009  Bulletin 2009/13**

(73) Proprietor: **Alcatel Lucent
75007 Paris (FR)**

(72) Inventors:
 • **Charlet, Gabriel
 91190 Villiers le Bacle (FR)**
 • **Renaudier, Jérémie
 91190 Gif sur Yvette (FR)**

(74) Representative: **Wetzel, Emmanuelle et al
Alcatel Lucent
Intellectual Property & Standards
Lorenzstrasse 10
70430 Stuttgart-Zuffenhausen (DE)**

(56) References cited:
**US-A- 4 466 108**

• **TSUKAMOTO, SATOSHI ET AL: "Coherent Demodulation of Optical Mutilevel Phase-Shift-Keying Signals Using Homodyne Detection and Digital Signal Processing" IEEE PHOTONICS TECHNOLOGY LETTERS, vol. 18, no. 10, 15 May 2006 (2006-05-15), pages 1131-1133, XP002465665**

**Description**

The present invention relates to a method and apparatus for coherent detection of optical signals, in particular an optical receiver for coherent detection of PSK-modulated optical signals.

Coherent detection is very promising to improve the efficiency of optical systems and to continue to increase the system capacity in the next years. Coherent detection for optical transmission could be as successful as coherent detection has been for radio communication. Nevertheless, signal impairments are different in optical transmission. Non-linearities are one of the main limitations of optical systems and especially Kerr non-linearities which induce some phase fluctuation on the optical signal. Nevertheless, these fluctuations are often at relatively low frequencies (~GHz), but they can severely degrade the system performance of a coherent detection scheme, even below the performance of traditional systems.

Coherent detection used for PSK (phase shift keying) modulation formats relies on the beating of signal beam with a beam of a cw (continuous wave) laser - called the local oscillator (LO) - onto photodiodes. Both beams are combined in a coherent mixer. A combination of two electrical waveforms generated by detecting the mixed beams provides the real and imaginary parts of the signal, and thus the signal phase information, provided that the carrier phase terms produced by the beating between the incoming signal and the LO are removed. Phase estimation of the carrier is thus an important step for coherent detection.

A prior art method for estimating the carrier phase from the detected signal is presented in the paper: D.-S. Ly-Gagnon, S. Tsukamoto, K. Katoh, and K. Kikuchi, "Coherent detection of optical quadrature phase shift keying signals with carrier phase estimation", Journal of Lightwave Technology, Vol. 24, No. 1, January 2006. This prior art proposes to average the carrier phase of individual samples over a given number of neighboring samples to obtain an estimated carrier phase. By subtracting this estimated carrier phase from the detected phase, the signal phase modulation is extracted. However, the channel characteristics and signal impairments are fluctuating and differing for individual transmission links.

The US patent US4466108 discloses an apparatus for providing coherent detection of a series of radio data bursts without a preamble by providing a reference waveform which has the same frequency as the carrier for a received TDMA/MPSK transmission, but having an arbitrary phase with respect to such signals. The reference waveform is used for pseudo-coherent demodulation. Symbol timing is available at all times by using symbol synchronization obtained from the previous bursts of the same transmission. The symbol timing is used to sample two quadrature outputs of the pseudo-coherent demodulator once per MPSK symbol interval. Storage of a sufficient number of demodulator samples allows a carrier phase estimate to be obtained from the message burst itself. The carrier phase estimate is then used for coherent detection on a delayed sequence of the demodulator samples.

The paper S. Tsukamoto, K. Katoh, and K. Kikuchi,"Coherent Demodulation of Optical Multilevel Phase-Shift-Keying Signals Using Homodyne Detection and Digital Signal Processing", IEEE Photonics Technology Letters, Vol. 18, No. 10, May 15, 2006, discloses a method for coherent demodulation of optical multilevel phase-shift-keying signals.

Thus, there is a need for improved carrier phase estimation in coherent detection of optical signals.

It is an object of the present invention to overcome the above deficiencies of the prior art. It is a further object of the invention to provide an improved method for coherent detection of optical signals and an improved optical receiver for coherent detection of PSK-modulated optical signals.

This object is achieved by the independent claims. The dependent claims refer to preferred embodiments of the invention.

A method for coherent detection of optical signals according to an aspect of the invention comprises: mixing a received signal beam with a beam of a local oscillator; detecting the beat between the signal beam and the local oscillator beam; estimating the carrier phase component of the signal; and determining the signal phase component under consideration of the estimated carrier phase component. The estimation of the carrier phase component comprises the processing of signal samples to cancel the phase modulation component. The method is applicable to any modulation format involving phase modulation. Preferably, a power law function is applied to the signal samples to cancel the signal phase component of the respective sample. For instance, the complex values of the signal samples are raised to the power of four in case of a QPSK modulated signal. The processed signal samples are then averaged over a number of samples to cancel phase fluctuations. In general, the signal samples are elevated to the power corresponding to the used PSK format. The carrier phase is estimated from the averaged signal. This processing results in a reliable and stable estimate of the carrier phase.

According to an aspect of the invention the number of samples for averaging the processed signal is dynamically adapted based on impairments of the received signal. Depending on the type of impairments, the optimal averaging length may be determined and the best signal quality achieved. While some impairment types allow a larger averaging length to obtain better carrier phase estimates, other types of optical signal impairment, e.g. non-linear effects, produce more phase drift which limits the length of useful averaging. Preferably, the processed signal is averaged by a sliding window and the size of the sliding window is adjusted based on the signal impairments. The dynamic adaptation of the averaging length according to the present invention will select the best available averaging length under consideration of the experienced signal degradation.

The coherent detection of optical signals according to the invention has the advantage that the local oscillator needs not be phase locked to the signal. It further can have a frequency offset to the frequency of the signal source. The phase of the signal carrier can be determined by processing of the in-phase and quadrature components of the received optical signal in the digital domain. The in-phase and quadrature components may be generated with balanced photo detectors.

According to an embodiment, a quality measurement for the received signal is determined and the number of samples is adapted depending on the determined signal quality. Preferably, the bit error rate (BER) of the received signal is determined as signal quality measurement. The determined signal quality may then be used in a feedback control loop to optimize the averaging length so that a maximum of the signal quality is achieved for the actual optical channel conditions and the experienced impairments. In case of the BER measurement, the minimum BER for the given transmission link is achieved with the adapted averaging length.

An optical receiver for coherent detection of PSK-modulated optical signals according to an embodiment of the invention comprises a mixer for mixing a received signal beam with a reference beam; a detection unit for detecting the beat between the signal beam and the reference beam; a carrier phase estimation unit for estimating the carrier phase component of the signal; and a signal phase estimation unit for estimating the modulated phase component of the signal. The carrier phase estimation unit estimates the carrier phase component by cancelling the phase of the modulated signal and averaging the resulting samples by means of a sliding window. Further, a carrier phase estimation control unit for determining the size of the sliding window based on impairments of the received signal is provided.

According to an aspect of the invention, an improved optical receiver that uses coherent detection with phase estimation to demodulate PSK signals is provided. The in-phase and quadrature components of the optical signal are retrieved using a homodyne phase-diversity detection scheme without locking the phase of the local oscillator. Homodyne detection provides linear optoelectrical conversion. The carrier phase is then estimated by digitally processing the signal.

A signal quality determining unit for determining the quality of the received signal may be provided. The size of the sliding window for averaging is preferably determined in accordance with the determined signal quality. Thus, the best window size for the actual signal impairment can be determined and the best estimate for the carrier phase component is derived.

The receiver may comprise a transmission link quality prediction unit for predicting the quality of the transmission link on which the received optical signal is transmitted. The prediction may be based on known properties of typical transmission links. This embodiment allows an a priori determination of expected signal impairments and the selection of a corresponding window size, even before deployment of the transmission link.

According to an embodiment, the receiver comprises a signal impairment estimation unit for estimating the type of impairment experienced by the received optical signal. The estimated type of signal impairment for the transmission link may be measured from test signals and optimal window sizes for the determined impairment type selected from a set of prototype pairs of impairment type - window sizes. Thus, the optimal window size for actual channel characteristics is applied for the estimation of the carrier phase component.

The present invention is illustrated by the following description of preferred embodiments, where

Fig. 1 shows schematically a coherent optical receiver according to an embodiment of the invention;

Fig. 2 schematically illustrates the estimation of the carrier phase term according to an embodiment of the invention;

Fig. 3 shows schematically a block diagram of an optical coherent receiver for decoding QPSK modulated signals according to an embodiment of the invention; and

Fig. 4 presents experimental results for an optical transmission system with dynamic phase estimation according to the present invention.

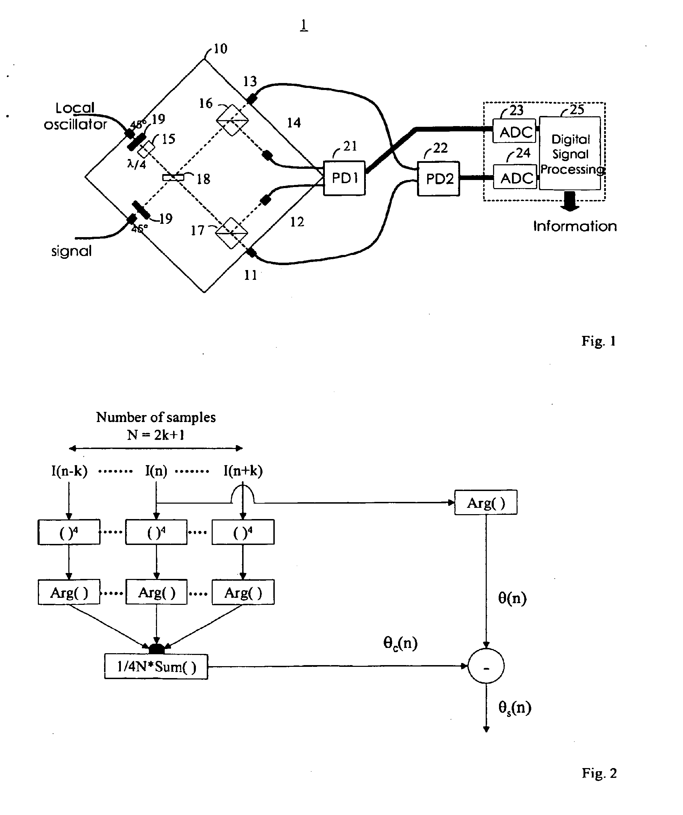

Fig. 1 shows schematically a phase-diversity homodyne receiver 1 comprising a coherent mixer 10 for coherent detection of PSK modulated signals. A signal beam at optical frequency $f_s$ and a beam of the local oscillator (LO) at frequency $f_{LO}$ are combined in the coherent mixer 10, which generates four interference beams for four output ports 11, 12 13, 14. The mixer 10 is designed such that, from one port to the next, the relative phase between signal and LO is rotated by another 90°. Ports 11 & 13 and 12 & 14 are fed to two sets of balanced photodiodes 21, 22. The optical phase-diversity homodyne receiver 1 shown in Fig. 1 uses free-space optical components as exemplary embodiment. The coherent mixer 10 is to generate optical signals that will create in-phase I and quadrature Q components after beating on the photodiodes. In other words, the combination of the coherent mixer and the photodiodes generate I and Q components. It is to be denoted that the present invention can be applied to other types of coherent receivers and other modulation formats involving phase modulation as well. In particular, the invention is applicable to any kind of I and Q component generation involving an unlocked oscillator.

Orthogonal states of polarization for the LO and the incoming signal create a 90° hybrid necessary for phase diversity. With a $\lambda$/4 waveplate (QWP) 15, the polarization of the LO becomes circular, while the signal remains linearly polarized. The polarization angle of the signal is 45° with respect to the principal axis of polarization beam splitters (PBSs) 16, 17. Polarizers 19 can be used to improve the polarization quality of the signals. After passing through the half mirror (HM) 18, the PBSs 16, 17 separate the two polarization components of the LO and signal. The balanced photodiodes PD1 21 and PD2 22 detect the beat between the LO and the signal in each polarization.

The in-phase and quadrature components of the optical signal are retrieved with the homodyne phase-diversity receiver 1, and converted to the electrical signals $I_{PD1}$ and $I_{PD2}$, respectively. The signals $I_{PD1}$ and $I_{PD2}$ contain information on the amplitude and phase of the optical signal. In case of wavelength-division multiplexing (WDM), the two electrical signals $I_{PD1}$ and $I_{PD2}$ can be low-pass filtered to demultiplex a selected wavelength from the incoming signal. Due to the sharp cutoff characteristics of electrical filters, individual channels can be filtered out without the need for optical filters. After the optional filtering, the signals $I_{PD1}(t)$ and $I_{PD2}(t)$ are sampled with analog-to-digital converters (ADCs) 23, 24. The sampled signals $I_{PD1}(n)$ and $I_{PD2}(n)$ are then processed in the digital domain by a digital signal processor 25 to determine the carrier phase and to demodulate the data.

The optical phase-diversity homodyne receiver according to an aspect of the invention is explained in more detail by referring to the coherent mixer shown in Fig. 1.

The optical signal on the 1st port 11 is characterized by

- for the signal : 1 reflection $\quad E_s = A_s e^{i(\varphi(t)+\pi/2)} e^{i\omega_s t}$
- for the LO : 0 reflection + 1/4 $\quad E_{ol} = A_{ol} e^{i\pi/2} e^{i\omega_o t}$

The electrical signal on the 1st port after photodetection is:

$$PD_{port1} = (E_s + E_{ol}).(E_s + E_{ol})^* = \left|A_s\right|^2 + \left|A_{ol}\right|^2 + 2A_s A_{ol}\cos[(\omega_s - \omega_{ol})t + \varphi(t)]$$

The optical signal on the 3rd port 13 is characterized by

- for the signal : 0 reflection $\quad E_s = A_s e^{i\varphi(t)} e^{i\omega_s t}$
- for the LO : 1 reflection + 1/4 $\quad E_{ol} = A_{ol} e^{i(\pi/2+t\pi/2)} e^{i\omega_o t} = A_{ol} e^{i\pi} e^{i\pi_o t}$

The electrical signal on the 3rd port after photodetection is:

$$PD_{port3} = \left|A_s\right|^2 + \left|A_{ol}\right|^2 - 2A_s A_{ol}\cos[(\omega_s - \omega_{ol})t + \varphi(t)]$$

The optical signal on the 2nd port 12 is characterized by

- for the signal : 1 reflection $\quad E_s = A_s e^{i(\varphi(t)+\pi/2)} e^{i\omega_s t}$
- for the LO : 2 reflections $\quad E_{ol} = A_{ol} e^{i\pi} e^{i\omega_o t}$

The electrical signal on the 2nd port after photodetection is:

$$PD_{port2} = \left|A_s\right|^2 + \left|A_{ol}\right|^2 + 2A_s A_{ol}\cos[(\omega_s - \omega_{ol})t + \varphi(t) - \pi/2]$$

The optical signal on the 4th port 14 is characterized by

- for the signal : 2 reflections $\quad E_s = A_s e^{i(\varphi)(t)+\pi)} e^{i\omega_s t}$
- for the LO : 1 reflection $\quad E_{ol} = A_{ol} e^{i(\pi/2)} e^{i\omega_o t}$

The electrical signal on the 4th port after photodetection is:

$$PD_{port4} = |A_s|^2 + |A_{ol}|^2 - 2A_s A_{ol} \cos[(\omega_s - \omega_{ol})t + \varphi(t) - \pi/2]$$

In the case of balanced receivers, the currents $I_{PD1}$ and $I_{PD2}$ are expressed as :

$$I_{PD1}(t) = PD_{port3}(t) - PD_{port1}(t) = 4A_s A_{ol} \cos[(\omega_s - \omega_{ol})t + \varphi(t)] \quad \text{(in phase)}$$

$$I_{PD2}(t) = PD_{port4}(t) - PD_{port2}(t) = 4A_s A_{ol} \sin[(\omega_s - \omega_{ol})t + \varphi(t)] \quad \text{(in quadrature)}$$

where:
$\varphi(t)$ is the phase information;
$A_s$ and $A_{ol}$ are respectively the signal power and the LO power; and
$\omega_s$ and $\omega_{ol}$, are respectively the signal pulsation and the LO pulsation.

Given the electrical signals $I_{PD1}$ and $I_{PD2}$, it is possible to recover the phase information $\varphi(t)$.

Note that in the case of single ended receivers, only the 1st port 11 and the 2nd port 12 are existing in the coherent mixer and the currents $I_{PD1}$ and $I_{PD2}$ are expressed as :

$$I_{PD1}(t) = PD_{port1}(t)$$

$$I_{PD2}(t) = PD_{port2}(t)$$

Pending the DC terms are negligible compared to in-phase and quadrature terms, it is still possible to recover the phase information.

The phase detection scheme according to the present invention is illustrated for the following example of a QPSK transmission at 20 Gbit/s where the incoming signal phase $\theta_s(t)$ is quantified to four values {$-\pi/2$, 0, $\pi/2$, $\pi$}. Applying coherent detection with a frequency detuning $\Delta f$ between the local oscillator and the incoming signal, the complex field of the detected signal samples resulting from the beating between the local oscillator and the incoming signal can be written as follows:

$$I(n) = A(n).\exp(j\,\theta(n)),$$

where the detected phase $\theta(n)$ is the sum of the incoming signal phase $\theta_s(n)$ and the carrier phase $\theta_c(n)$ (corresponding to $2\pi.\Delta f.t$):

$$\theta(n) = \theta_s(n) + \theta_c(n)$$

Since the optical carrier phase $\theta_c(n)$ varies much more slowly than the signal phase modulation, it is possible to obtain an accurate phase estimate by averaging the carrier phase over a plurality of symbol intervals. Raising I(n) (n = 1,. .. , N) to the fourth power $I^4(n)$ cancels the modulated phase for QPSK modulation. Other modulation schemas may require different processing of the samples to cancel the modulated phase. For instance, BPSK may require a squaring function to be applied to the complex values of signal samples.

The phase is then averaged over a block of N samples by summing the complex amplitudes $I^4(n)$. The phase of the resulting complex amplitude is divided by 4, leading to a phase estimate $\theta_c$ that lies between $-\pi/4$ and $\pi/4$. The carrier phase estimate $\theta_c$ is

$$\Theta_c = \frac{1}{4}\arg\left[\sum_{n=1}^{N} I^4(n)\right].$$

The QPSK-modulated signal phase $\theta_s$ is obtained by subtracting the phase estimate $\theta_e$ from the phase of the n-th sample of the incoming signal: $\theta_s(n) = [\arg(I(n)) - \theta_c]$.

Alternatively, after having elevated the signal samples to the power corresponding to the used PSK format (with QPSK here), the carrier phase estimate $\theta_c$ can be calculated by averaging:

$$\Theta_c = \frac{1}{4.N}\sum_N \arg\left((I(k))^4\right)$$

Fig. 2 schematically illustrates the estimation of the carrier phase term. The detected phases are obtained by elevating the detected field to the power of four in order to cancel the incoming signal phase values (equals to multiples of $2\pi$).

Then, the resulting carrier phases obtained for individual samples are averaged over a given number of samples N to obtain the estimated carrier phase $\theta_c(n)$. Please note that the sliding window of N samples for averaging in Fig. 2 is symmetrical to the actual sample n. Thus, the complex field I(n-k), .. , I(n), .. , I(n+k) of signal samples, where N = 2k+1, are considered for the estimation of the carrier phase $\theta_c(n)$ of sample *n*.

One aspect of the present invention is to dynamically vary the number N of samples considered for the phase estimation of the carrier. In back-to-back, the larger the number of samples considered, the better the performance. Nevertheless, this is no more true after transmission when non-linear effects will "scramble" the phase of the transmitted signal. By reducing the number of samples considered in the phase estimation, the performance is increased in this case.

According to an aspect of the present invention, the number of neighboring samples N used to average the carrier phase is adjusted dynamically as a function of the impairment type of the transmission link. Preferably, the number of samples N are adjusted, e.g., from a real-time feedback signal such as BER measurement, or from the knowledge of the QoT (Quality of Transmission) predicted for the considered transmission link.

By dynamically adjusting the averaging (window) length (i.e. the number N of samples) for the carrier phase estimation, it is possible to have the best system performance whatever the impairments are. If the signal is mainly degraded by optical noise, the number of samples considered has to be large. If the signal is mainly degraded by non-linear effects, the number of samples considered can be reduced down to a small number, 3 for example. This solution allows operating with the optimum performance whatever the impairment sources are (non-linearities which scramble the carrier phase at a relatively low speed, or ASE noise which is not correlated between 2 consecutive bits).

According to an aspect of the invention, the best averaging length for carrier phase estimation is determined as a function of the transmission impairments that the optical signal experiences. This is particular useful as the transmission channel can be reconfigured dynamically in optical transmission networks. In this manner, the transmission channel may be changed to a longer or shorter distance, thus experiencing more or less non-linear effects and different types of non-linear effects. The window size adaptation of the present invention will respond to the actual channel impairments and select the appropriate averaging length.

If a laser with sufficiently low phase noise is applied in the transmission system, a sufficiently long averaging length may be used in order to have the best performance in OSNR limited conditions (i.e. when non-linearities are low). A larger averaging length results in better transmission performance because the estimated phase has less fluctuation due to the averaging effect.

When non-linearities become larger, and especially when adjacent channels add significant amount of cross non-linear phase (which can be the case if adjacent channels are intensity modulated as in current WDM network at 10Gb/s, or if propagation occurs over low dispersion fibers which enhances non-linear channel crosstalk), it is preferred to reduce the averaging length as the phase drift in the averaging window becomes larger.

According to an embodiment, the averaging length is determined by a feedback loop. For instance, the carrier phase is estimated with 3 or more averaging lengths (short, medium and long). A control and evaluation unit determines the respective transmission quality for the actual transmission channel for the different averaging lengths and selects the averaging length resulting in the best transmission quality. For instance, BER is used as quality criterion.

In a transparent network, the origin of the channel degradation may be many. If the configuration of the channel changes (to a longer distance, for example), the non-linear impairments can become higher. If the adjacent channels are intensity modulated (10Gb/s NRZ for example), shorter averaging length should be selected. If the channel propagates over low dispersion fiber which generates higher level of cross non-linear interaction, shorter averaging length should be selected. Dynamic adjustment of the averaging length in response to the experienced signal degradation is thus preferred within the transponder in order to be able to vary this parameter during the operation or life of the transponder.

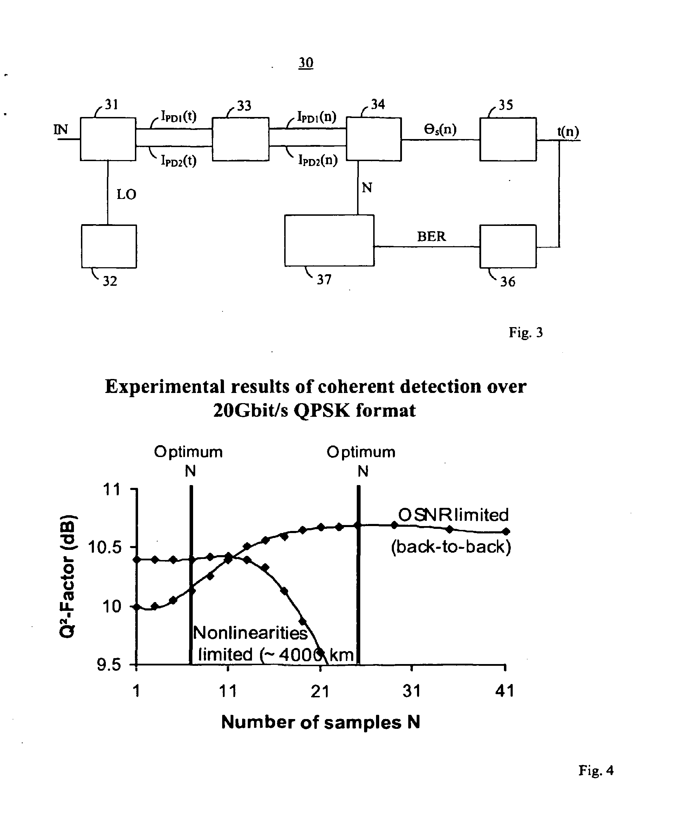

Fig. 3 shows schematically a block diagram of an optical coherent receiver 30 for decoding QPSK modulated signals according to an embodiment of the invention. An optical/electrical conversion unit 31 comprises a coherent mixer and a pair of balanced photodiodes to detect the beat between the optical input signal IN and the beam LO from a local oscillator 32. The output of the optical/electrical conversion unit 31 are electrical signals $I_{PD1}(t)$ and $I_{PD2}(t)$ which are fed to an analog/digital conversion unit 33 that samples the electrical signals and generates discrete samples $I_{PD1}(n)$ and $I_{PD2}(n)$. A signal decoder 34 receives the samples $I_{PD1}(n)$ and $I_{PD2}(n)$ and estimates the modulated phase $\theta_s(n)$ of the signal by applying, e.g., the method shown in Fig. 2 for estimation of the carrier phase $\theta_c$. For the carrier phase estimation, a window length of N samples for averaging is applied. The detected signal phase $\theta_s(n)$ is then input to a QPSK symbol decoder 35. QPSK symbol decoder 35 discriminates the received phase values $\theta_s(n)$ into the four QPSK constellation states to determine the symbol t(n) for sample n: t(n) = (00, 01, 11, or 10).

A channel supervision unit 36 monitors the transmission quality of the transmission channel and determines a quality measurement, e.g. BER. The determined BER for the actual channel condition is input to a window control unit 37 which determines the optimal averaging length N based on the actual channel impairment conditions. For instance, the window control unit 37 varies the averaging length N and determines if the resulting quality measurement improves or degrades. Depending on the result in the quality measure such as BER, the window control unit 37 determines what window size N provides the best transmission quality. The selected averaging length N is input to the signal decoder 34 for controlling the size of the sliding averaging window.

The averaging length N may be updated when the transmission channel is set up or reconfigured. The window size update may be repeated periodically after a given time interval has lapsed, or even continuously. Thus, optimal transmission quality is achieved for the actual type of impairments experienced on the optical channel.

Alternatively, the impairment type of the channel is determined, e.g. by measurements and comparing with prototype impairments, or by applying a priory knowledge on impairments, and a typical averaging length is selected for the determined impairment type.

According to an embodiment of the present invention the carrier phase estimation is preferably performed by a Digital Signal Processor (DSP) which receives the sampled signals $I_{PD1}(n)$ and $I_{PD2}(n)$. Alternatively, some DSPs include ADCs and the signals $I_{PD1}(t)$ and $I_{PD2}(t)$ are directly input, possibly after an optional filtering. The carrier phase estimation is preferably implemented by software instructions for execution on the DSP. Alternatively, dedicated hardware circuits may be employed to carry out the carrier phase estimation with a dynamic window size. The dynamic window size further reduces the complexity and memory requirements of the DSP process for carrying out the phase estimation process.

Experimental results for an optical transmission system with dynamic phase estimation according to the present invention obtained on both a back-to-back configuration and a long-haul transmission (~4000km) are presented in Fig. 4. These two configurations have been chosen because they correspond to different impairment types induced by OSNR (optical signal to noise ratio) degradation and non-linearities, respectively. Fig. 4 shows the evolution of the $Q^2$-Factor (derived from BER measurements) as a function of the number of samples N used for the carrier phase estimation. It can be clearly seen from this figure that the optimum number of samples N is large (>20) when the system is limited by OSNR, whereas this optimum is reduced in case of non-linearities (here < 15, but the optimal number could be even more reduced when larger non-linearities are involved). Consequently, this figure demonstrates the impact of adjusting the number of samples N in order to improve the performance of the system as a function of impairments.

**Claims**

1. Method for coherent detection of optical signals, comprising:

Mixing (10) a received signal beam with a beam of a local oscillator;
Detecting (21, 22) the beat between the received signal beam and the local oscillator beam;
Estimating (34) the carrier phase component of the received signal; and
Estimating (34) the modulated phase of the received signal, under consideration of the estimated carrier phase component,
wherein the estimation (34) of the carrier phase component comprises:

canceling the modulated phase of the received signal, thereby yielding a processed signal;
averaging the processed signal over a number of samples; and
estimating the carrier phase from the averaged signal;

**characterized in that**
the number of samples for averaging the processed signal is dynamically adapted (37) based on a type of impairment experienced by the received signal, or a determined quality of the received signal or a predicted quality of a transmission link on which the received signal is transmitted.

2. Method of claim 1, wherein the number of samples for averaging the processed signal is dynamically adapted (37) based on the determined quality of the received signal, and wherein the bit error rate (BER) of the received signal is determined.

3. Method of claim 1, wherein the processed signal is averaged by a sliding window, the size of the sliding window being adjusted based on the type of impairment experienced by the received signal, the determined quality of the received signal or the predicted quality of the transmission link on which the received signal is transmitted.

4. Method of claim 1, wherein in-phase and quadrature components of the received signal are determined.

5. Method of claim 1, wherein the received signal is QPSK modulated and the signal samples are raised to the power of four to cancel the modulated phase of the respective sample.

6. Optical receiver for coherent detection of PSK-modulated optical signals, comprising:

a mixer (10) for mixing a received signal beam with a reference beam;
a detection unit (21, 22) for detecting the beat between the signal beam and the reference beam;
a carrier phase estimation unit (34) for estimating a carrier phase component of the received signal; and
a signal phase estimation unit (34) for estimating a phase of the received PSK-modulated signal;
wherein the carrier phase estimation unit (34) is arranged to estimate the carrier phase component by cancelling the phase of the received PSK-modulated signal and to average the resulting samples by means of a sliding window;
**characterized by**
a carrier phase estimation control unit (36, 37) being arranged for dynamically determining a size of the sliding window based on a type of impairment experienced by the received signal, or a determined quality of the received signal or a predicted quality of a transmission link on which the received signal is transmitted.

7. Optical receiver of claim 6, comprising a signal quality determining unit (36) for determining the quality of the received signal, wherein the size of the sliding window is determined in accordance with the determined signal quality.

8. Optical receiver of claim 6, comprising a transmission link quality prediction unit (36) for predicting the quality of the transmission link on which the received optical signal is transmitted.

9. Optical receiver of claim 6, comprising a signal impairment estimation unit (36) for estimating the type of impairment experienced by the received optical signal.

**Patentansprüche**

1. Verfahren zur kohärenten Detektion von optischen Signalen, umfassend:

Mischen (10) eines empfangenen Signalstrahls mit einem Strahl eines lokalen Oszillators;
Detektieren (21, 22) des Taktes zwischen dem empfangenen Signalstrahl und dem Strahl des lokalen Oszillators;
Schätzen (34) der Trägerphasenkomponente des empfangenen Signals; und
Schätzen (34) der modulierten Phase des empfangenen Signals unter Berücksichtigung der geschätzten Trägerphasenkomponente,
wobei das Schätzen (34) der Trägerphasenkomponente umfasst:

Annullieren der modulierten Phase des empfangenen Signals, wodurch ein verarbeitetes Signal ausgegeben wird;
Mitteln des verarbeiteten Signals über eine Anzahl von Abtastwerten; und
Schätzen der Trägerphase aus dem gemittelten Signal;

**dadurch gekennzeichnet, dass**

die Anzahl der Abtastwerte zur Mittelung des verarbeiteten Signals auf der Basis einer Art der von dem empfangen Signal erfahrenen Verminderung, oder einer vorbestimmten Qualität des empfangenen Signals oder einer vorhergesagten Qualität einer Übertragungsverbindung, auf welcher das empfangene Signal übertragen wird, dynamisch angepasst (37) wird.

2. Verfahren nach Anspruch 1, wobei die Anzahl der Abtastwerte für die Mittelung des verarbeiteten Signals auf der Basis der ermittelten Qualität des empfangenen Signals dynamisch angepasst (37) wird, und wobei eine Bitfehlerrate (BER) des empfangenen Signals ermittelt wird.

3. Verfahren nach Anspruch 1, wobei das verarbeitete Signal durch ein Sliding Window gemittelt wird, wobei die Größe des Sliding Windows auf der Basis der Art der von dem empfangenen Signal erfahrenen Verminderung, der ermittelten Qualität des empfangenen Signals oder der vorhergesagten Qualität der Übertragungsverbindung, auf welcher das empfangene Signal übertragen wird, angepasst wird.

4. Verfahren nach Anspruch 1, wobei die Inphasen- und Quadraturkomponenten des empfangenen Signals ermittelt werden.

5. Verfahren nach Anspruch 1, wobei das empfangene Signal QPSK-moduliert wird und die Signalabtastwerte mit vier potenziert werden, um die modulierte Phase des entsprechenden Abtastwerts zu annullieren.

6. Optischer Empfänger für die kohärente Detektion von PSK-modulierten optischen Signalen, umfassend:

Einen Mischer (10) zum Mischen eines empfangenen Signalstrahls mit einem Referenzstrahl;
eine Detektionseinheit (21, 22) zum Detektieren des Taktes zwischen dem Signalstrahl und dem Referenzstrahl;
eine Trägerphasenschätzungseinheit (34) zum Schätzen einer Trägerphasenkomponente des empfangenen Signals; und
eine Signalphasenschätzungseinheit (34) zum Schätzen einer Phase des empfangenen PSK-modulierten Signals,
wobei die Trägerphasenschätzungseinheit (34) für das Schätzen der Trägerphasenkomponente durch Annullieren der Phase des empfangenen PSK-modulierten Signals und für das Mitteln der daraus entstehenden Abtastwerte anhand eines Sliding Windows ausgelegt ist;
**dadurch gekennzeichnet, dass**
eine Trägerphasenschätzungs-Steuerungseinheit (36, 37) dazu ausgelegt ist, eine Größe des Sliding Windows auf der Basis einer Art der von dem empfangenen Signal erfahrenen Verminderung, oder einer vorbestimmten Qualität des empfangenen Signals oder einer vorhergesagten Qualität einer Übertragungsverbindung, auf welcher das empfangene Signal übertragen wird, dynamisch zu bestimmen.

7. Optischer Empfänger nach Anspruch 6, umfassend eine Signalqualitätsermittlungseinheit (36) zum Ermitteln der Qualität des empfangenen Signals, wobei die Größe des Sliding Windows gemäß der ermittelten Signalqualität bestimmt wird.

8. Optischer Empfänger nach Anspruch 6, umfassend eine Übertragungsverbindungsqualitätsvorhersageeinheit (36) zum Vorhersagen der Qualität der Übertragungsverbindung, auf welcher das empfangene optische Signal übertragen wird.

9. Optischer Empfänger nach Anspruch 6, umfassend eine Signalgüteverminderungsschätzungseinheit (36) zum Schätzen der Art der von dem optischen Signal erfahrenen Verminderung.

**Revendications**

1. Procédé de détection cohérente de signaux optiques, comprenant les étapes suivantes :

mélanger (10) un faisceau de signal reçu à un faisceau d'un oscillateur local ;
détecter (21, 22) le battement entre le faisceau de signal reçu et le faisceau de l'oscillateur local ;
estimer (34) la composante de phase de la porteuse du signal reçu ; et
estimer (34) la phase modulée du signal reçu, en considérant la composante de phase de la porteuse estimée,

dans lequel l'estimation (34) de la composante de phase de la porteuse comprend les étapes suivantes :

annuler la phase modulée du signal reçu, produisant ainsi un signal traité;
moyenner le signal traité sur un nombre donné d'échantillons ; et
estimer la phase de la porteuse à partir du signal moyenné ;

**caractérisé en ce que**
le nombre d'échantillons pour moyenner le signal traité est adapté dynamiquement (37) sur la base d'un type de dégradation subie par le signal reçu, ou d'une qualité déterminée du signal reçu ou d'une qualité prévue d'une liaison de transmission sur laquelle le signal reçu est transmis.

2. Procédé selon la revendication 1, dans lequel le nombre d'échantillons pour moyenner le signal traité est adapté dynamiquement (37) sur la base de la qualité déterminée du signal reçu, et dans lequel le taux d'erreur binaire (TEB) du signal reçu est déterminé.

3. Procédé selon la revendication 1, dans lequel le signal traité est moyenné par une fenêtre glissante, la taille de la fenêtre glissante étant ajustée sur la base du type de dégradation subie par le signal reçu, de la qualité déterminée du signal reçu ou de la qualité prévue de la liaison de transmission sur laquelle le signal reçu est transmis.

4. Procédé selon la revendication 1, dans lequel des composantes en phase et en quadrature du signal reçu sont déterminées.

5. Procédé selon la revendication 1 dans lequel le signal reçu est modulé par MDPQ et les échantillons de signal sont élevés à la puissance quatre pour annuler la phase modulée de l'échantillon respectif.

6. Récepteur optique de détection cohérente de signaux optiques modulés par MDP, comprenant :

un mélangeur (10) pour mélanger un faisceau de signal reçu à un faisceau de référence ;
une unité de détection (21, 22) pour détecter le battement entre le faisceau de signal et le faisceau de référence ;
une unité d'estimation de phase de la porteuse (34) pour estimer une composante de phase de la porteuse du signal reçu ; et
une unité d'estimation de phase de signal (34) pour estimer une phase du signal modulé par MDP reçu ;
dans lequel l'unité d'estimation de phase de la porteuse (34) est conçue pour estimer la composante de phase de la porteuse en annulant la phase du signal modulé par MDP reçu et pour moyenner des échantillons résultants au moyen d'une fenêtre glissante ;
**caractérisé par**
une unité de commande d'estimation de phase de la porteuse (36, 37) conçue pour déterminer dynamiquement une taille de la fenêtre glissante sur la base d'un type de dégradation subie par le signal reçu, ou d'une qualité déterminée du signal reçu ou d'une qualité prévue d'une liaison de transmission sur laquelle le signal reçu est transmis.

7. Récepteur optique selon la revendication 6, comprenant une unité de détermination de qualité de signal (36) pour déterminer la qualité du signal reçu, dans lequel la taille de la fenêtre glissante est déterminée selon la qualité de signal déterminée.

8. Récepteur optique selon la revendication 6, comprenant une unité de prévision de la qualité de la liaison de transmission (36) pour prévoir la qualité de la liaison de transmission sur laquelle le signal optique reçu est transmis.

9. Récepteur optique selon la revendication 6, comprenant une unité d'estimation de dégradation du signal (36) pour estimer le type de dégradation subie par le signal optique reçu.

Fig. 1

Fig. 2

<u>30</u>

Fig. 3

## Experimental results of coherent detection over 20Gbit/s QPSK format

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4466108 A

### Non-patent literature cited in the description

- **D.-S. LY-GAGNON ; S. TSUKAMOTO ; K. KATOH ; K. KIKUCHI.** Coherent detection of optical quadrature phase shift keying signals with carrier phase estimation. *Journal of Lightwave Technology,* January 2006, vol. 24 (1

- **S. TSUKAMOTO ; K. KATOH ; K. KIKUCHI.** Coherent Demodulation of Optical Multilevel Phase-Shift-Keying Signals Using Homodyne Detection and Digital Signal Processing. *IEEE Photonics Technology Letters,* 15 May 2006, vol. 18 (10